# Europäisches Patentamt

# European Patent Office

# Office européen des brevets

(11) Veröffentlichungsnummer: **0 075 642**
**A2**

(12) **EUROPÄISCHE PATENTANMELDUNG**

(21) Anmeldenummer: **82101065.9**

(51) Int. Cl.³: **G 01 N 21/37**

(22) Anmeldetag: **12.02.82**

(30) Priorität: **22.09.81 DE 3137659**

(43) Veröffentlichungstag der Anmeldung:
**06.04.83 Patentblatt 83/14**

(84) Benannte Vertragsstaaten:
**AT BE CH FR IT LI LU NL**

(71) Anmelder: **H. MAIHAK AG**
**Semperstrasse 38**
**D-2000 Hamburg 60(DE)**

(72) Erfinder: **Nestler, Volker, Dr. Dipl. Phys.**
**Garleff-Bindtweg 58**
**D-2000 Hamburg 65(DE)**

(72) Erfinder: **Olsowski, Wolfgang, Dr. Dipl. Phys.**
**Bekwisch 5**
**D-2000 Norderstedt(DE)**

(74) Vertreter: **Meyer-Roxlau, Reiner Ferdinand,**
**Dipl.-Ing. et al,**
**Patentanwälte Dr. Franz Lederer Dipl.-Ing. Reiner F.**
**Meyer-Roxlau Lucile-Grahn-Strasse 22**
**D-8000 München 80(DE)**

(54) **Verfahren und Vorrichtung zur Messung der Konzentration eines IR-, NIR-, VIS- oder UV-Strahlung absorbierenden Gases in einer Gasmatrix.**

(57) Verfahren und Vorrichtung zur Messung der Konzentration eines IR-, NIR-, VIS- oder UV-Strahlung absorbierenden Gases in einer Gasmatrix im Wege der nichtdispersiven Einstrahlphotometrie unter Kombination der negativen Selektivmodulation und positiven Filterung bei Verwendung eines mit dem Meßgas gefüllten Meßraums, eines Gasfiltermodulators und eines pneumatischen Detektors mit nachgeschalteter elektrisch arbeitender Auswertungseinrichtung für die Detektorsignale unter Bildung von Signalquotienten als Maß für die zu messende Gaskonzentration.

FIG. 1

EP 0 075 642 A2

PATENTANWÄLTE

0075642

DR. A. VAN DER WERTH
DIPL.-ING. (1934-1974)

DR. FRANZ LEDERER
DIPL.-CHEM.

R. F. MEYER-ROXLAU
DIPL.-ING.

8000 MÜNCHEN 80
LUCILE-GRAHN-STRASSE 22

TELEFON: (089) 47 29 47
TELEX: 524624 LEDER D
TELEGR.: LEDERERPATENT

H. Maihak AG
Semperstr. 38

2000 Hamburg   60

22. September 1981
M/Ge

Verfahren und Vorrichtung zur Messung der
Konzentration eines IR-, NIR-, VIS- oder UV-Strahlung
absorbierenden Gases in einer Gasmatrix

-----------------------------------------------------------

Die Erfindung betrifft zum einen ein Verfahren und zum anderen eine
Vorrichtung zur Messung der Konzentration eines IR-, NIR-, VIS-
oder UV-Strahlung absorbierenden Gases in einer Gasmatrix gemäß
Oberbegriff der Patentansprüche 1 bzw. 6   .

Mit Hilfe von nichtdispersiven Gaskonzentrationsmeßgeräten, also
auf optischer Basis arbeitenden Gasanalysatoren, die weder Gitter
noch Prismen enthalten, wird der Meßwert gewöhnlich aus dem Vergleich zweier Lichtströme gewonnen, nämlich einem vom Meßgas
stark beeinflußten Lichtstrom und einem vom Meßgas in geringerem
Umfang oder garnicht beeinflußten Lichtstrom.

Für diese Art der Konzentrationsmessung sind Meßverfahren und
-geräte bekannt, bei denen die Lichtströme gleichzeitig geometrisch
voneinander getrennte Lichtwege durchlaufen (erste Möglichkeit),
bei denen die beiden Lichtströme denselben Lichtweg, aber zeitlich nacheinander durchlaufen (zweite Möglichkeit) oder bei denen die beiden Lichtströme geometrisch voneinander getrennte Lichtwege zeitlich nacheinander durchlaufen (dritte Möglichkeit).

Bei Benutzung der ersten bzw. dritten Möglichkeit werden den beiden Lichtströmen gleichphasige bzw. gegenphasige periodische Intensitätsschwankungen aufgeprägt, die in pneumatischen Detektoren zu Druckschwankungen umgesetzt und in ein elektrisches Signal umgewandelt werden, das der Differenz der Druckamplituden entspricht, die die beiden modulierten Lichtströme erzeugen.

Meßverfahren bzw. -geräte dieser Art zeichnen sich zwar durch eine hohe Selektivität aus, insbesondere wenn von nach dem Zwei-Schichten-Prinzip aufgebauten pneumatischen Detektoren Gebrauch gemacht wird, was der dritten Möglichkeit entspricht. Nachteilig ist jedoch, daß Meß- und Referenzstrahl unterschiedliche Lichtwege durchlaufen. Verschmutztes Meßgas, wie es unter Betriebsbedingungen in die Meßküvette gelangen kann und dann dort zu einem die Transmission reduzierenden Fensterbelag führt, beeinflußt nur einen der beiden Lichtwege, so daß als Folge eine Nullpunktverschiebung eintritt. Außerdem tritt bei Änderung der Lichtintensität eine Empfindlichkeitsänderung ein, weil die Größe des Differenzsignals der Lichtintensität proportional ist. Diese Nachteile treten nicht bei Meßverfahren und -geräten auf, die von der oben erwähnten zweiten Möglichkeit Gebrauch machen.

Bei diesen Meßverfahren und -geräten werden beispielsweise gasgefüllte Filterküvetten oder Interferenzfilter in periodischer Folge in den Strahlengang eingeführt. Die Filterfunktionen sind dabei so gewählt, daß jeweils nur einer der beiden aufeinander folgenden Lichtströme wesentlich vom Meßgas beeinflußt werden kann. Bei Meßgeräten der oben erwähnten zweiten Möglichkeit handelt es sich bei der Verwendung von Gasen als Filter ("negative Selektivmodulation") um Korrelationsphotometer, während es sich bei der Verwendung von Interferenzfiltern ("positive Selektiv-Modulation") um Bifrequenzphotometer handelt. Sowohl Korrelations- als auch Bifrequenzphotometer können mit derselben elektronischen Einrichtung zur Auswertung betrieben werden, die ihr Eingangssignal von einem Breitbanddetektor, beispielsweise einem pyroelektrischen Detektor, empfängt. Bei beiden Photometerarten wird der Quotient beispw. der beiden aufeinander folgenden Lichtintensitäten als Maß für den Meßwert verwendet. Damit ist die Empfindlichkeit dieser Meßgeräte von sogenannten "grauen" (spektralunabhängigen) Intensitätsänderungen unabhängig. Zwar können auch keine durch Fensterverschmutzung bedingten Nullpunktverschiebungen auftreten, jedoch besitzen Bifrequenzphotometer je nach Anwendung nur eine geringe Selektivität. Aber auch [+)] Korrelationsphotometern erreicht die Selektivität nicht diejenige von Gasanalysatoren mit getrennten Lichtwegen und nach dem Zwei-Schichten-Prinzip aufgebauten pneumatischen Detektoren.

Der Erfindung liegt die Aufgabe zugrunde, das Verfahren und die Vorrichtung der eingangs bezeichneten Gattung so auszubilden, daß auf der Basis der nichtdispersiven Photometrie durch Kombination der negativen Selektivmodulation und der positiven Filterung in Hinblick auf die Stabilität des Nullpunkts und der Empfindlichkeit sowie in Hinblick auf die Selektivität mindestens ein Verfahren bzw. eine Vorrichtung erreicht wird, die den jeweils besten Verfahren und Geräten des Standes der Technik entsprechen.

Erfindungsgemäß wird diese Aufgabe in verfahrenstechnischer bzw. vorrichtungstechnischer Hinsicht durch die Merkmale des kennzeichnenden Teils der Patentansprüche 1 bzw. 6 gelöst.

Vorteilhafte Weiterbildungen sowohl in verfahrenstechnischer als auch in vorrichtungstechnischer Hinsicht sind aus den jeweils zugehörigen Unteransprüchen zu ersehen.

+) bei

- 4 -

0075642

Die Erfindung sieht also tatsächlich eine Kombination einer negativen Selektivmodulation mit einer positiven Filterung vor, wodurch ein hochselektives Meßverfahren bzw. -gerät erreicht wird, die ein Optimum hinsichtlich Empfindlichkeit und/oder Querempfindlichkeit durch die Wahl des jeweils zu verwendenden pneumatischen Detektors, für den ein Ein-Schicht-, Zwei-Schicht- oder teilgeschichteter Detektor in Frage kommen, erreichen lassen. Durch das verwendete Einstrahlverfahren und die Art der Meßwertbildung im Wege des Quotientenverfahrens wird eine Driftfreiheit sowohl des Nullpunkts als auch der Meßempfindlichkeit gewährleistet, wenn die Lichtintensität, bedingt beispielsweise durch Fensterverschmutzung, Strahleralterung etc., nachläßt.

Das erfindungsgemäße Meßverfahren und das zugehörige Meßgerät eignen sich insbesondere für die Messung einer gasförmigen Komponente, also des Meßgases, die in sehr kleinen Konzentrationen in einem zu prüfenden Gas, also einer Gasmatrix, enthalten ist, welch letzteres Gas auch relativ große Anteile anderer gasförmiger Komponenten enthalten kann, die bei anderen Meßverfahren und -geräten zu großen Querempfindlichkeiten führen würden.

Im folgenden wird die Erfindung anhand eines bevorzugten Ausführungsbeispiels und unter gleichzeitiger Bezugnahme auf die Zeichnungen weiter ins einzelne gehend erläutert; in den Zeichnungen zeigen:

Fig. 1      eine erfindungsgemäße Vorrichtung und

Fig. 2 A, B und C   drei besondere Modulatorformen.

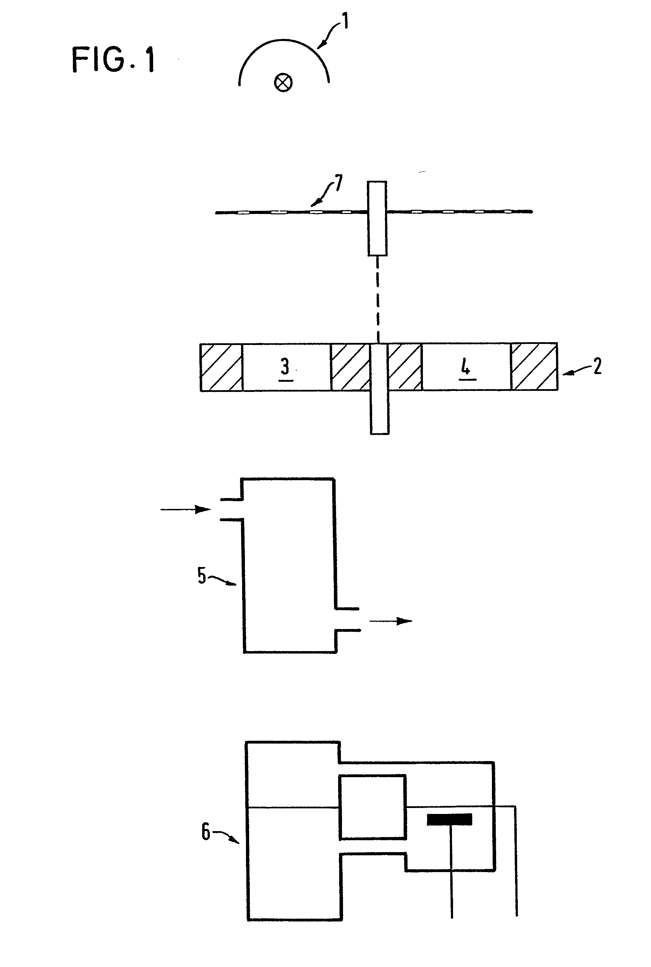

Die in Fig. 1 dargestellte Meßvorrichtung ist eine solche mit einem Zwei-Schicht-Detektor.

Zur Modulation der Strahlung einer Lichtquelle 1 dient ein dieser nachgeordnetes Küvettenkarussell 2 mit zwei Gasfilterküvetten 3 und 4, die periodisch durch den Lichtstrahl hindurch bewegbar sind. Dabei ist die eine Küvette mit dem Meßgas A hoher Konzentration und die andere Küvette mit einem Inertgas gefüllt. Dem Küvettenkarussell 2 ist im Strahlengang des Lichtstrahls ein mit dem Meßgas A gefülltes Volumen, bei dem dargestellten Ausführungsbeispiel in der Form einer Durchflußküvette 5, nachgeordnet, woran sich dann in Strahlrichtung ein pneumatischer Zwei-Schicht-Detektor 6 anschließt.

Die Reihenfolge der Anordnung des Küvettenkarussells 2 und des mit dem Meßgas A gefüllten Volumens, also beim dargestellten Ausführungsbeispiel der Durchflußküvette 5, ist beliebig.

Die Konzentration des Meßgases A in der Filterküvette ist so groß gewählt, daß die zusätzliche Absorption in der Durchflußküvette 5, die als Meßküvette dient, bedingt durch die unbekannte Konzentration des im Meßgas A enthaltenen besonderen Gases das Signal praktisch nicht beeinflußt. Eine Signaländerung durch das Meßgas tritt nur in dem Augenblick auf, in dem die mit dem Inertgas gefüllte Filterküvette 4 im Strahlengang liegt.

Die Signalauswertung kann mittels unterschiedlicher Methoden ausgeführt werden.

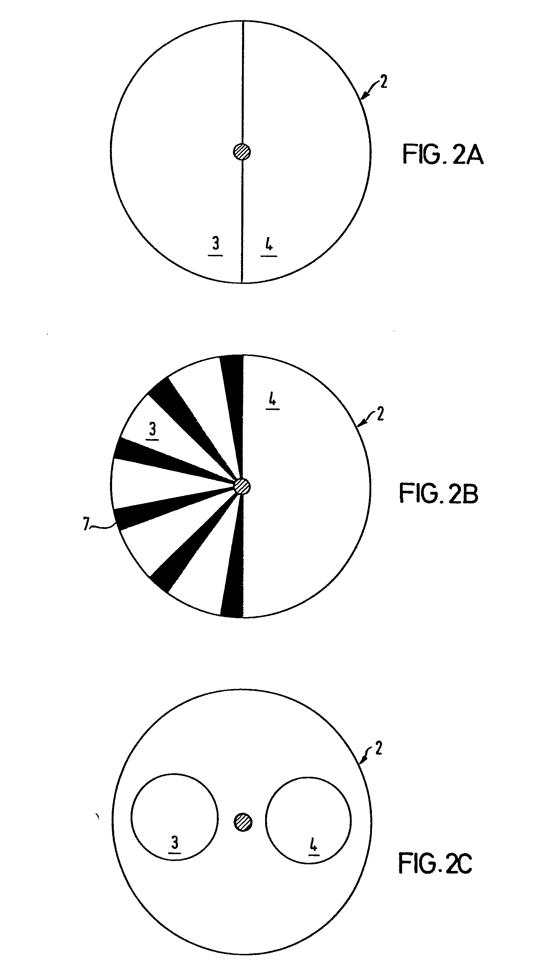

Das als Modulator wirkende Küvettenkarussell 2 ist gemäß Fig. 2A so aufgebaut, daß die Gasfilterküvetten 3 und 4 halbzylinderförmig ausgebildet sind. Die Signale der ersten Halbperiode, während der sich die Gasfilterküvette 3 im Strahlengang befindet, und der zweiten Halbperiode, während der sich die Gasfilterküvette 4 im Strahlengang befindet, werden jeweils aufintegriert und anschließend dividiert.

Der Meßwert ergibt sich dann nach Addition einer Kompensationsspannung U, die so gewählt ist, daß sich bei Nullgas der Wert S = 0
einstellt, zu

$$S = U + \frac{S_1}{S_2} \qquad \text{oder} \quad S = U + \frac{S_2}{S_1} \quad . \qquad (1)$$

Bei einer anderen Verfahrensweise bewirkt ein mit dem Küvettenkarussell 2 starr verbundenes Blendenrad 7 (Fig. 1 und 2 B) während
der ersten Halbperiode eine 100 %-Intensitätsmodulation, deren
Frequenz $\omega'$ sich durch die Blendensegmentanordnung erheblich von
der Grundmodulationsfrequenz $\omega$ des Küvettenkarussells 2 unterscheidet. Durch bekannte Lock-In-Techniken lassen sich dann Signale
messen, die proportional zur Differenz $(S_2 - S_1)$ $(\omega)$ und proportional zu $S_1$ $(\omega')$ sind. Der Meßwert ergibt sich dann wiederum aus
der Quotientenbildung bei möglicher zusätzlicher Addition einer
Kompensationsspannung zu:

$$S = U + \frac{S_2 - S_1}{S_1} \qquad \text{oder} \quad S = U + \frac{S_1}{S_2 - S_1} \qquad (2)$$

Es kann aber auch eine optische Kompensation dadurch erfolgen, daß
eine teilweise Abdeckung der Gasfilterküvette 4 die zeitlich integralen
Intensitäten der Gasfilterküvetten 3 und 4 gleich sind; in diesem Fall
ergibt sich für ein Nullgas $S_1 = S_2$. In diesem Fall kommt nur die
erste der beiden unter (2) angegebenen Formeln in Betracht (U = 0).

Für die dritte Verfahrensweise wird als Modulator ein Küvettenkarussell 2 gemäß Darstellung in Fig. 2 C verwendet, bei dem die
Hellphasen der Gasfilterküvetten mit Dunkelphasen abwechseln. Die
Signalauswertung erfolgt dann mit Hilfe von zwei Lock-In-Verstärkern,
die bei $\omega$ bzw. $2\omega$ arbeiten (Fourieranalyse bis zur zweiten Ordnung).
Auch hier wird wieder für die Meßwertbildung der Quotient beider Signale verwertet, und der Meßwert ergibt sich zu

$$S = U + \frac{S_1 - S_2}{S_1 + S_2} \quad \text{oder} \quad U + \frac{S_1 + S_2}{S_1 - S_2} \tag{3}$$

Beide Signale können auch nach der zweiten Verfahrensweise erhalten werden, wenn sich die Blendensegmentanordnung des Blendenrads 7 nicht nur über die Gasfilterküvette 3, sondern über beide Gasfilterküvetten 3 und 4 erstreckt. Diese Signale wären auch bei Verwendung eines Blendenrads erreichbar, das nicht starr mit dem Gasfilterkarussell 2 verbunden ist, sondern mit anderer Frequenz rotiert.

Welche der drei vorstehend angegebenen Verfahren zur Signalaus-wertung jeweils eingesetzt werden sollte, hängt von verschiedenen Faktoren ab, nämlich der Begrenzung des Signal-Rausch-Verhältnisses durch Detektor-Rauschen oder Modulationsrauschen (phasejitter) oder der Linearität des Meßsignals im Meßbereich.

Patentansprüche
------------------------

1. Verfahren zur Messung der Konzentration eines IR-, NIR-, VIS- oder UV-Strahlung absorbierenden Gases in einer Gasmatrix, dadurch gekennzeichnet, daß der einen mit dem Meßgas gefüllten Meßraum durchsetzenden Strahlung vor, in oder hinter dem Meßraum zwei periodisch aufeinander folgende Spektralzustände aufgeprägt werden, wobei der erste Zustand mittels eines Filters eingestellt wird, das im Bereich des Absorptionsspektrums des Meßgases absorbiert, und wobei der zweite Zustand mittels eines Filters eingestellt wird, das im Bereich des Absorptionsspektrums des Meßgases im Vergleich zu dem für die Einstellung des ersten Zustandes verwendeten Filter nur wenig oder garnicht absorbiert, daß der diskontinuierliche spektralmodulierte Intensitätsverlauf mittels eines mit dem Meßgas gefüllten pneumatischen Detektors gemessen wird und daß das Detektorausgangssignal zur Bildung von Quotienten der Form $(S_2 - S_1) / S_1$, $(S_2 - S_1) / (S_1 + S_2)$ oder $S_2 / S_1$ oder deren Kehrwerte elektrisch gebildet werden, wobei die Quotienten ein Maß für die Konzentration des Meßgases darstellen und $S_1$ bzw. $S_2$ die Signale am Detektorausgang während des ersten bzw. zweiten Zustands sind.

2. Verfahren nach Anspruch 1, dadurch gekennzeichnet, daß die beiden periodisch aufeinander folgenden Spektralzustände jeweils durch Dunkelphasen voneinander getrennt werden.

3. Verfahren nach Anspruch 1 oder 2, dadurch gekennzeichnet, daß der erste Zustand mittels eines Interferenzfilters eingestellt wird, dessen Transmissionskurve die Absorptionsbanden des Meßgases einschließt.

4. Verfahren nach Anspruch 1 oder 2, dadurch gekennzeichnet, daß der erste Zustand mittels einer Filterküvette eingestellt wird, die mit nicht-absorbierendem Gas gefüllt ist.

5. Verfahren nach einem der Ansprüche 1 bis 4, dadurch gekennzeichnet, daß der Intensitätsverlauf mittels eines Ein-Schicht-, eines teilgeschichteten, eines Zwei-Schicht- oder mittels eines Mehr-Schicht-Detektors mit einem Membrankondensator oder einem Mikroströmungsfühler gemessen wird.

6. Vorrichtung zur Messung der Konzentration eines IR-, NIR-, VIS- oder UV-Strahlung absorbierenden Gases in einer Gasmatrix, dadurch gekennzeichnet, daß einem Strahler (1) ein Spektralmodulator (2) und ein mit dem Meßgas (A) gefüllter Meßraum (5) nachgeordnet sind, daß im Strahlengang hinter beiden ein mit dem Meßgas (A) gefüllter pneumatischer Detektor (6) angeordnet ist, daß der Spektralmodulator (2) ein erstes Filter (3), das im Bereich des Absorptionsspektrums des Meßgases (A) absorbiert, und ein zweites Filter (4) aufweist, das im Bereich des Absorptionsspektrums des Meßgases (A) im Vergleich zum ersten Filter (3) nur wenig oder garnicht absorbiert, und daß an dem Detektor eine dessen Ausgangssignal aufnehmende Einrichtung zur elektrischen Verarbeitung zu Quotienten der Form $(S_2 - S_1) / S_1$, $(S_2 - S_1) / (S_1 + S_2)$ oder $S_2 / S_1$ oder deren Kehrwerte als Maß für die Konzentration des Meßgases (A) angeschlossen ist, wobei $S_1$ und $S_2$ die Detektorausgangssignale bedingt durch das erste bzw. das zweite Filter (3, 4) darstellen.

7. Vorrichtung nach Anspruch 6, dadurch gekennzeichnet, daß das erste Filter eine mit dem Meßgas (A) in definierter Konzentration gefüllte Küvette (3) ist.

8. Vorrichtung nach Anspruch 6 oder 7, dadurch gekennzeichnet, daß das zweite Filter ein Interferenzfilter ist, dessen Transmissionskurve die Absorptionsbanden des Meßgases (A) einschließt.

9. Vorrichtung nach Anspruch 6 oder 7, dadurch gekennzeichnet, daß das zweite Filter eine mit einem nicht-absorbierenden Gas (Inertgas) gefüllte Küvette (4) ist.

10. Vorrichtung nach einem der Ansprüche 6 bis 9, dadurch gekennzeichnet, daß der pneumatische Detektor (6) ein Ein-Schicht, ein teilgeschichteter oder ein Zwei-Schicht- oder auch ein Mehr-Schicht-Detektor mit einem Membrankondensator oder einem Mikroströmungsfühler ist.

11. Vorrichtung nach einem der Ansprüche 6 bis 10, dadurch gekennzeichnet, daß dem Spektralmodulator (2) ein Blendenrad (7) vorgeschaltet ist, und zwar mit gleicher oder anderer Frequenz als der Spektralmodulator (2) in Rotation versetzbar.

FIG.1

FIG. 2A

FIG. 2B

FIG. 2C